# EUROPEAN PATENT SPECIFICATION

(11) **EP 1 939 415 B1**
(45) Date of publication and mention of the grant of the patent: **17.02.2010**
(21) Application number: 07024159.1
(22) Date of filing: 12.12.2007
(51) Int. Cl.: F01N 1/02, F01N 3/20, F01N 3/22, F01N 3/28, F01N 3/30

(54) **Exhaust system**
Abgassystem
Système d'échappement

(30) Priority: 20.12.2006 JP 2006342481
(43) Date of publication of application: 02.07.2008
(73) Proprietor: Yamaha Hatsudoki Kabushiki Kaisha, Iwata-shi, Shizuoka-ken 438-8501 (JP)
(72) Inventor: Suzuki, Kanemitsu, Iwata-shi Shizuoka-ken 438-8501 (JP); Takii, Osamu, Iwata-shi Shizuoka-ken 438-8501 (JP); Izumi, Toru, Iwata-shi Shizuoka-ken 438-8501 (JP)
(74) Representative: Grünecker, Kinkeldey, Stockmair & Schwanhäusser Anwaltssozietät

(56) References cited:
- EP-A- 0 554 875
- EP-A- 1 722 079
- FR-A- 2 344 714
- FR-A- 2 827 908
- JP-A- 53 118 619
- JP-A- 58 202 320

## Description

The present invention relates to an exhaust system for an engine, in particular of a motorcycle, and more particularly to an exhaust system for a four-cycle engine in which a resonator is used to improve an output of the engine.

To purify exhaust gas of an engine by a catalyst converter (simply referred to as "catalyst," hereinafter), the catalyst has to be warmed up to a so-called active temperature.

For purification of exhaust gas by the catalyst immediately after a start of the engine, it is effective to provide the catalyst in the proximity of an exhaust port of the engine so that a temperature of the catalyst rises to the active temperature as soon as possible.

Patent Document 1 discloses an exhaust system for a four-cycle engine, in which a catalyst is disposed in a vicinity of the engine as described above. The exhaust system disclosed in Patent Document 1 is the exhaust system for a motorcycle. It includes an exhaust pipe extending from an exhaust port of the four-cycle engine to the rear of a vehicle, a muffler connected to a rear end of the exhaust pipe, and a catalyst provided in a middle part of the exhaust pipe.

Meanwhile, the exhaust pipe of the engine is constructed in a manner such that an output of the engine is improved by using exhaust pulsation generated due to propagation of a pressure wave of exhaust gas in the exhaust pipe. In this case, a length of the exhaust pipe has a large influence on an output of the engine in low to medium speed operation. This is because a pressure wave propagated downstream from the exhaust port of the engine in the exhaust pipe (simply referred to as "positive pressure wave," hereinafter) reflects at the downstream open end of the exhaust pipe, and returns to the exhaust port as a negative pressure wave, and the timing of this returning changes according to a length of the exhaust pipe. Therefore, a length of the exhaust pipe is set to an optimum length for each engine.
Patent Document 1: JP-A-Sho 53-118619

The catalyst is provided in the vicinity of the exhaust port of the engine in Patent Document 1, and thereby exhaust gas at a relatively high temperature flows into the catalyst. Consequently, a temperature of the catalyst can rise to an active temperature in a short period after a start of the engine.

However, in this conventional exhaust system, a positive pressure wave propagating downstream from the exhaust port in the exhaust pipe reflects on the catalyst before reaching a downstream end of the exhaust pipe, and returns as a reflected wave (positive pressure wave). Therefore, in the exhaust system, the substantial position of the downstream end of the exhaust pipe is a position of the catalyst, and thus the substantial length of the exhaust pipe becomes short.

If the substantial length of the exhaust pipe becomes short as in this case, the reflected wave returns to the exhaust port at an inappropriate timing. Therefore, in the exhaust system disclosed in Patent Document 1, there is a problem that an output of the engine lowers in low to medium speed operation although warmup of the catalyst can be made speedily.

FR 2827908 A1 refers to an exhaust gas purifying system. Exhaust gas reaches from a combustion engine into an exhaust pipe in which two catalytic members are positioned.

EP 1 722 079 A1 relates to an exhaust gas purifying device. In an exhaust pipe, two catalysts are positioned wherein a silencer is connected to a downstream end of the exhaust pipe.

FR 2344714 A shows a silencer device within an exhaust pipe. Upstream of an expansion chamber a resonator is positioned.

EP 0 554 875 A1 refers to an exhaust pipe system with a catalyst provided in the exhaust pipe and a silencer connected downstream of this catalyst to the exhaust pipe.

It is an objective of the present invention to provide an exhaust system, in particular for a four-cycle engine, that can improve an output of the engine with a catalyst provided in an exhaust pipe in a manner such that warmup of the catalyst is facilitated.

Said objective is solved, according to the present invention, by an exhaust system having the features of claim 1.

Further, preferably two catalysts are disposed upstream and downstream along a flow of exhaust gas at a distance from each other.

Still further, preferably a secondary air passage for inducting fresh air is connected to the exhaust pipe. Furthermore, the secondary air passage may be connected to a part of the exhaust pipe upstream of the resonator.

Yet further still, preferably the secondary air passage is connected to a part of the exhaust pipe between the catalyst and the resonator.

Likewise, it is beneficial if two catalysts are provided and a secondary air passage for inducting fresh air is connected to the exhaust pipe.

It is further beneficial if the secondary air passage is connected to a part of the exhaust pipe upstream of the resonator.

It is still further beneficial if one of the two catalysts is disposed upstream of the resonator and a part of the exhaust pipe to which the secondary air passage is connected, and the other catalyst is disposed downstream of the resonator and the part of the exhaust pipe to which secondary air passage is connected.

In the following, the present invention is explained in greater detail with respect to several embodiments thereof in conjunction with the accompanying drawings, wherein:
- FIG. 1: is a side view showing en embodiment of an exhaust system for a four-cycle engine according to the present teaching,
- FIG. 2: is a plan view of the exhaust system for a four-cycle engine according to the present teaching,
- FIG. 3: is a side view of a resonator as viewed from the right side of the vehicle,
- FIG. 4: is a cross-sectional view taken along a line IV-IV in FIG. 3,
- FIG. 5: is a vertical cross-sectional view of the resonator,
- FIG. 6: is a diagram showing a construction of the embodiment of the exhaust system for a four-cycle engine according to the present teaching,
- FIG. 7: is a graph showing the relationship between engine revolution, output and torque,
- FIG. 8: is a view showing a construction of another embodiment,
- FIG. 9: is a view showing a construction of another embodiment,
- FIG. 10: is a view showing a construction of another embodiment, and
- FIG. 11: is a view showing a construction of another embodiment.

### Description of Reference Numerals:

2: engine
1: exhaust system
4: exhaust pipe
5: upstream catalyst
6: downstream catalyst
7: muffler
26: secondary air inducting pipe
61: catalyst

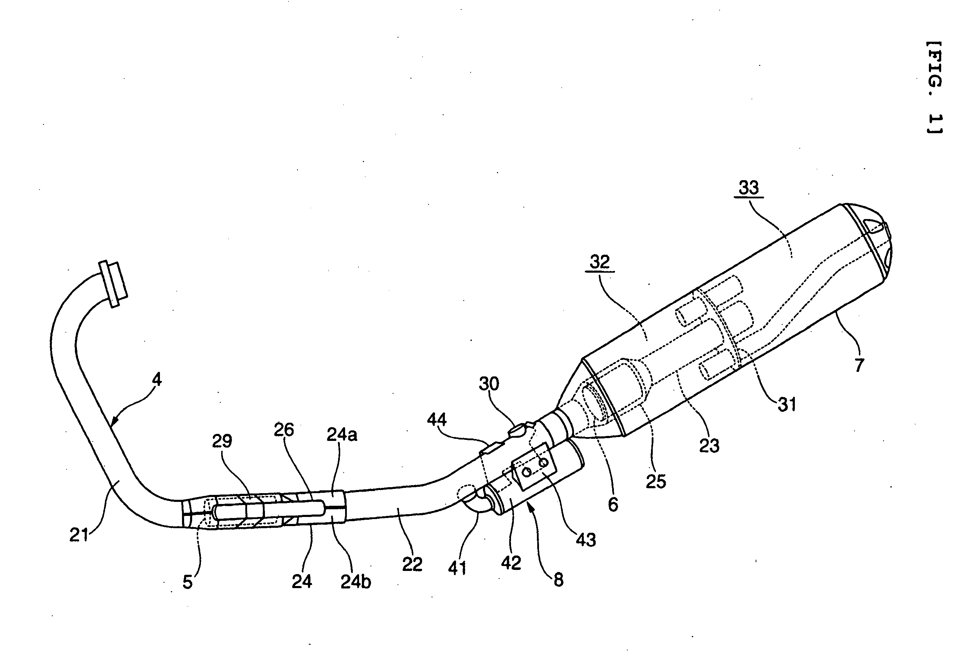

Hereinafter, an embodiment of the exhaust system for a four-cycle engine according to the present teaching will be described in detail with reference to FIGs. 1 through 7. Here, descriptions will be made of a case that the present teaching is applied to an exhaust system for a motorcycle.

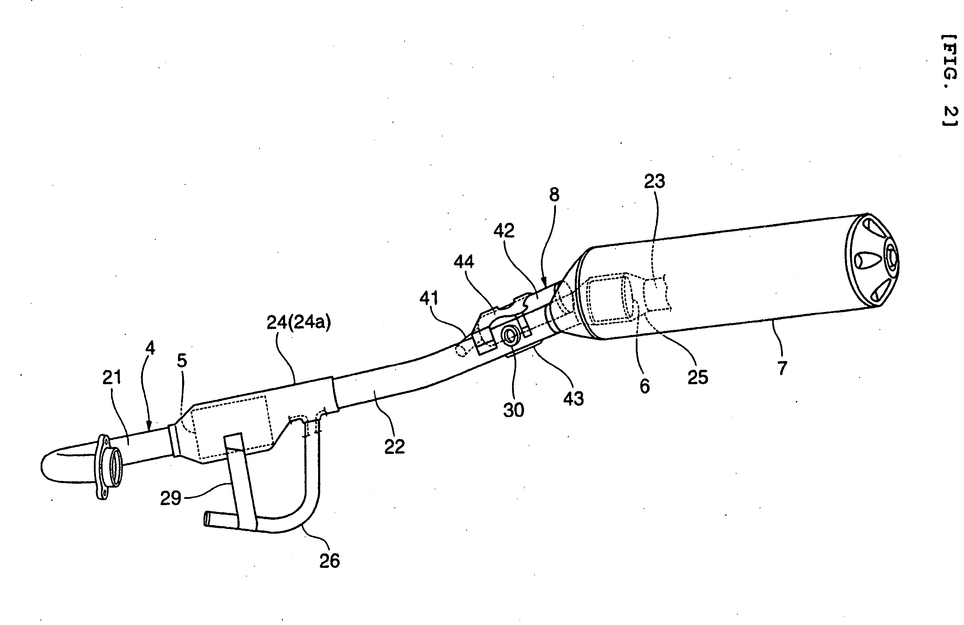

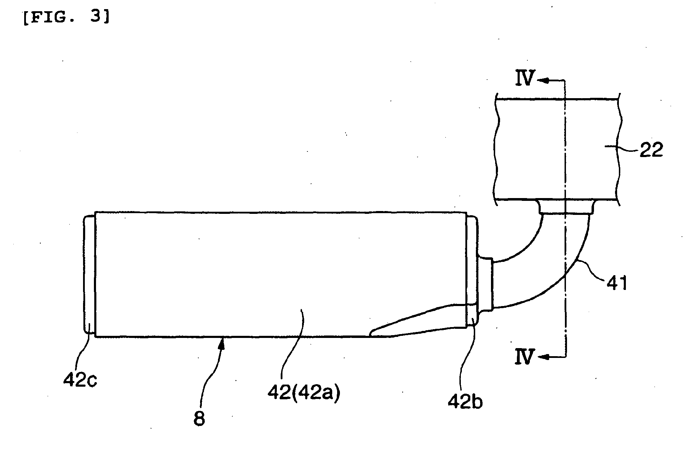

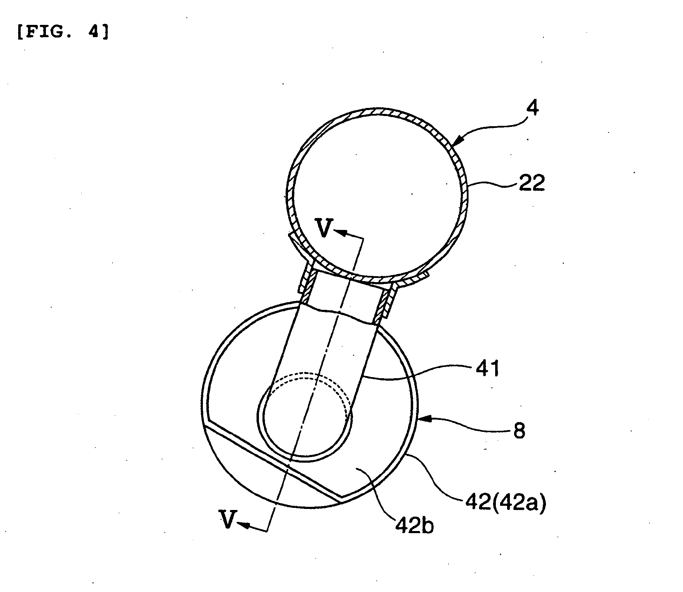

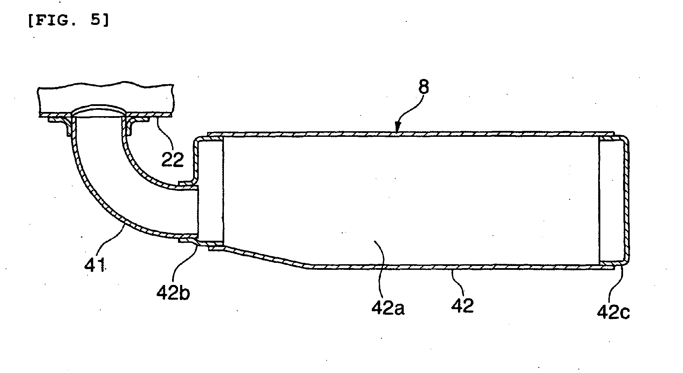

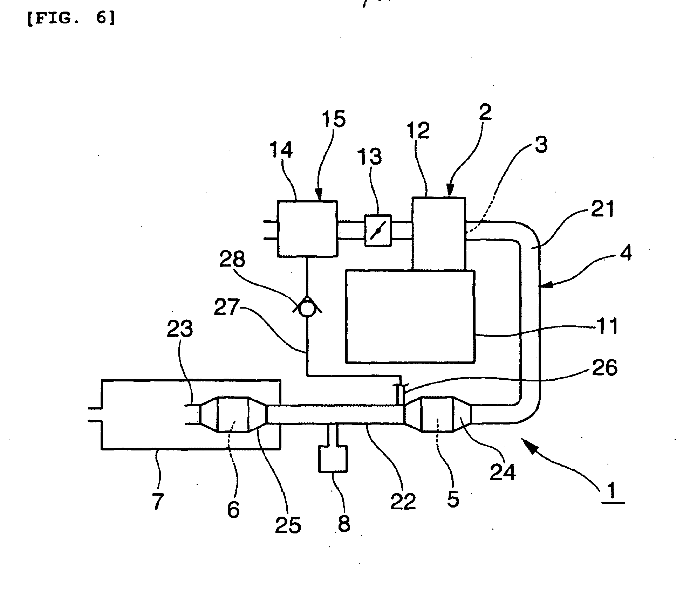

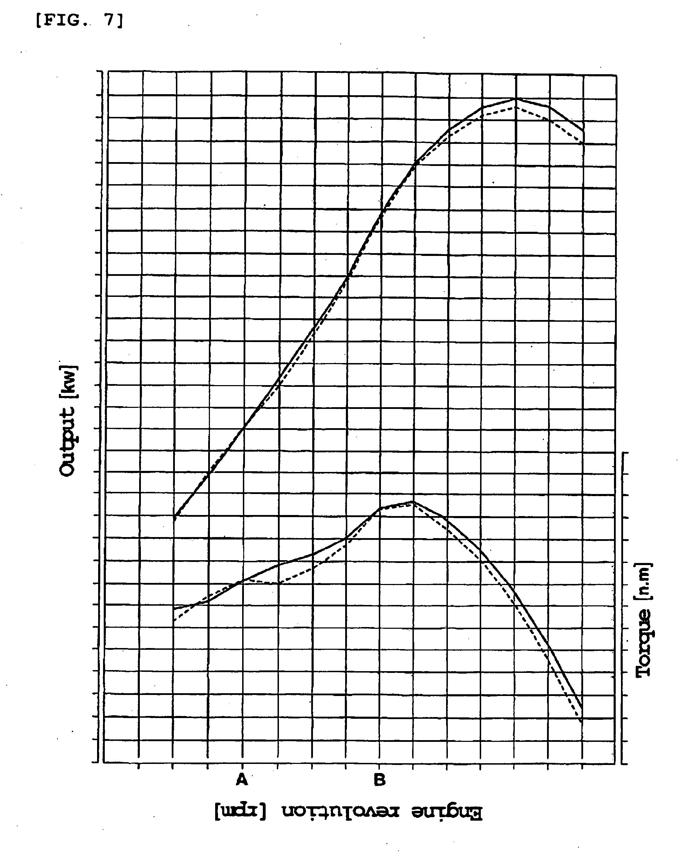

FIG. 1 is a side view showing the exhaust system for a four-cycle engine according to the present teaching, and FIG. 2 is a plan view thereof. FIG. 3 is a side view of the resonator as viewed from the right side of the vehicle. FIG. 4 is a cross-sectional view taken along a line IV-IV in FIG. 3. FIG. 5 is a vertical cross-sectional view of the resonator, and also is a cross-sectional view taken along a line V-V in FIG. 4. FIG. 6 is a diagram showing a construction of the exhaust system for a four-cycle engine according to the present teaching. FIG. 7 is a graph showing the relationship between engine revolution, output and torque.

In these figures, a reference numeral 1 denotes an exhaust system for a motorcycle according to this embodiment. As shown in FIG. 6, the exhaust system is constructed with an exhaust pipe 4 whose upstream end is connected to an exhaust port 3 of an engine 2, an upstream catalyst 5 and a downstream catalyst 6 provided upstream and downstream along the flow of exhaust gas in the exhaust pipe 4 at a distance from each other, a muffler 7 connected to the downstream end of the exhaust pipe 4, a resonator 8 connected to a middle part of the exhaust pipe 4, and so forth. The exhaust system 1 according to this embodiment is formed in a manner such that the muffler 7 described below is positioned on the right side of the vehicle.

The engine 2 is a four-cycle engine, and carried on a vehicle body frame (not shown) in a manner such that a cylinder 12 is positioned on a crankcase 11. The exhaust port 3 is provided in front of the cylinder 12. An intake system 15 having a throttle valve 13 and an air cleaner 14 is connected in the rear of the cylinder 12. Fuel for the engine 2 is injected into an intake passage by an injector (not shown). A fuel supply system of the engine 2 is not limited to a system using an injector, but can be a device using a carburetor.

As shown in FIGs. 1 and 2, the exhaust pipe 4 is formed in a manner such that three pipes 21 through 23, and catalyst casings 24 and 25 are welded together. Specifically, the exhaust pipe 4 is constructed with the first pipe 21 for inducting exhaust gas from the exhaust port 3 of the engine 2 into the casing 24 of the upstream catalyst 5, the second pipe 22 for communicatively connecting the casing 24 and the casing 25 of the downstream catalyst 6 together, and the third pipe 23 extending rearward from the downstream end of the downstream catalyst 6. The downstream end of the second pipe 22, the casing 25 of the downstream catalyst 6, and the third pipe 23 are housed inside the muffler 7.

The first pipe 21 extends from the exhaust port 3 to a part below the crankcase 11 in front of the engine 2, and its lower end curves to point toward the rear of the vehicle at a part below the crankcase 11. The casing 24 welded to the downstream end of the first pipe 21 is positioned below the crankcase 11.

The casing 24 is constructed to vertically split into two parts. An upper half part 24a and a lower half part 24b retain the upstream catalyst 5. The casing 24 and the upstream catalyst 5 according to this embodiment are disposed below the crankcase 11, and thus are formed in a manner such that a vertical thickness is smaller than a horizontal width to make the minimum ground clearance larger.

A general catalyst, in which a ceramic carrier carries a catalytic metal, is used as the upstream catalyst 5.

A secondary air inducting pipe 26 for drawing secondary air into the exhaust passage is connected to the vicinity of the upstream catalyst 5 in the casing 24. The secondary air inducting pipe 26 is welded to a side part of the casing 24 pointing to the left of the vehicle to protrude to the left of the vehicle, and is curved in a manner such that its distal end points to the front of the vehicle.

As shown in FIG. 6, the distal end of the secondary air inducting pipe 26 is connected to the air cleaner 14 via an air hose 27 and a reed valve 28. The reed valve 28 opens when an inside of the exhaust pipe 4 is under a negative pressure, so that secondary air (fresh air) is drawn from the air cleaner 14 into the exhaust pipe 4. Also, as shown in FIG. 2, the distal end of the secondary air inducting pipe 26 is retained in the casing 24 by a stay 29.

As shown in FIG. 1, the second pipe 22 curves at its middle part in the direction of the length in a manner such that its downstream end points rearward upward of the vehicle. The resonator 8 described below is mounted on a lower part in the vicinity of a downstream part of the curve. Also, a mount 30 for mounting an O₂ sensor (not shown) is provided on an upper part downstream of the part of the second pipe 22 on which the resonator 8 is mounted.

The casing 24 of the downstream catalyst 6 welded to the downstream end of the second pipe 22 retains the downstream catalyst 6 by the two half parts formed to split in the diameter direction. The same kind of catalyst as the upstream catalyst 5 is used as the downstream catalyst 6.

The downstream end of the third pipe 23 passes through a partition panel 31 of the muffler 7, and is welded to the partition panel 31.

The muffler 7 is a so-called reversal type muffler and constructed in a manner such that the partition panel 31 defines a front expansion chamber 32 and a rear expansion chamber.33, and the expansion chambers to damp exhaust sound.

As shown in FIGs. 3 through 5, the resonator 8 is constructed with a communicative pipe 41 whose one end is welded to the second pipe 22, and a resonator main body 42 welded to the other end of the communicative pipe 41. The communicative pipe 41 curves in a manner such that the other end points rearward upward of the vehicle.

As shown in FIG.5, the resonator main body 42 is constructed with a cylindrical part 42a, a first lid body 42b for blocking one end of the cylindrical part 42a, through which the other end of the communicative passage 41 passes, and a second lid body 42c for blocking the other end of the cylindrical part 42a. The resonator main body 42 is formed to have a space inside. As shown in FIGs. 1 and 2, the resonator 8 according to this embodiment is mounted on the second pipe 22 in a manner such that the resonator main body 42 extends in parallel along the second pipe 22. The resonator main body 42 and the second pipe 22 are connected together by connecting members 43 and 44 on the left side and the right side of the vehicle.

The resonator main body 42 is constructed to reduce exhaust pulsation in the exhaust pipe 4 when revolution of the engine 2 is prescribed revolution in the low and medium speed operation range.

The resonator 8 according to this embodiment is positioned between the upstream catalyst 5 and the downstream catalyst 6, and thereby can reduce a negative pressure wave and a reflected wave (a positive pressure wave) in the second pipe 22 positioned between both the catalysts 5 and 6.

The negative pressure wave is generated as a positive pressure wave propagated downstream from the exhaust port 3 of the engine 2 in the first pipe 21 passes over the upstream catalyst 5 to enter the second pipe 22. The reflected wave is generated as a positive pressure wave propagated downstream in the second pipe 22 reflects on the downstream catalyst 6.

Therefore, according to the exhaust system 1 of the engine 2 of this embodiment, a negative pressure wave and a reflected wave propagating toward the exhaust port 3 of the engine 2 in the exhaust pipe 4 can be reduced by the resonator 8. Accordingly, the substantial length of the exhaust pipe 4, which would be small due to a disposition of the upstream catalyst 5, can be increased by of the resonator 8.

As a result, with this embodiment, exhaust gas at a relatively high temperature flows into the upstream catalyst 5, and thereby the upstream catalyst 5 is warmed up to an active temperature in a short period immediately after a start of the engine 2. Also, an output of the engine 2 in low to medium speed operation can be improved.

As shown in FIG. 7, in the engine 2 including the exhaust system 1 according to this embodiment, an output and a torque rise at prescribed revolution in the low and medium speed operation range, and a so-called torque drop can be removed. In FIG. 7, the solid lines indicate variations of output and torque in the case that the exhaust system 1 according to this embodiment is used, and the broken lines indicate variations of output and torque in the case that the resonator 8 is removed from the exhaust system 1 according to this embodiment. As can be understood from FIG. 7, if the resonator 8 is mounted, an output and a torque become high when engine revolution is between revolution (A) and revolution (B).

In the exhaust system 1 of the engine 2 according to this embodiment, the exhaust system 1 has two catalysts, and thus the two catalysts sufficiently purify exhaust gas immediately after a start of the engine.

In the exhaust system 1 of the engine 2 according to this embodiment, the secondary air inducting pipe 26 is mounted on the exhaust pipe 4, so that fresh air is drawn from the secondary air passage in the secondary air inducting pipe 26 into the exhaust passage. Thus, an oxidizing reaction is promoted at the downstream catalyst 6, and thereby a purification rate of exhaust gas is improved at the downstream catalyst 6.

The secondary air inducting pipe 26 according to this embodiment is connected to a part of the exhaust pipe 4 upstream of the resonator 8. Secondary air is drawn into the exhaust pipe 4 more easily when exhaust gas smoothly flows in the exhaust pipe 4. On the other hand, when exhaust gas passes through the resonator 8, the resonator 8 may disturb a flow of exhaust gas. That is, according to this embodiment, the secondary air inducting pipe 26 is connected to a part of the exhaust pipe 4 where the flux of exhaust gas is not disturbed by the resonator 8, in other words, a part of the exhaust pipe 4 where exhaust gas smoothly flows, and thus secondary air can be efficiently drawn into the exhaust pipe 4. Exhaust gas flowing on the downstream side of the upstream catalyst 5 flows especially faster compared with exhaust gas flowing on the upstream side of the upstream catalyst 5, and thus more secondary air can be drawn into the exhaust pipe 4 according to this embodiment.

In the exhaust system 1 of the engine 2 according to this embodiment, the secondary air inducting pipe 26 is connected to a part of the exhaust pipe 4 between the upstream catalyst 5 and the resonator 8. Thus, secondary air drawn into the exhaust pipe 4 can be sent to the upstream catalyst 5 by a negative pressure wave traveling toward the engine 2 in the exhaust pipe 4. Therefore, according to this embodiment, an oxidizing reaction is promoted at the upstream catalyst 5 positioned upstream of the part to which the secondary air inducting pipe 26 is connected, so that exhaust gas can be more efficiently purified.

As described above, in the exhaust system 1 according to this embodiment, one of the two catalysts 5 and 6 (the upstream catalyst 5) is disposed upstream of the resonator 8 and the part of the exhaust pipe 4 to which the secondary air inducting pipe is connected, and also the other catalyst (the downstream catalyst 6) is disposed downstream of the resonator 8 and the part of the exhaust pipe 4 to which the secondary air inducting pipe is connected. Therefore, according to this embodiment, unnecessary exhaust pulsation is cancelled out by the resonator 8 between the two catalysts 5 and 6, and secondary air is sufficiently supplied to a part between the two catalysts 5 and 6. Accordingly, exhaust gas can be more sufficiently and efficiently purified while improving an output of the engine 2.

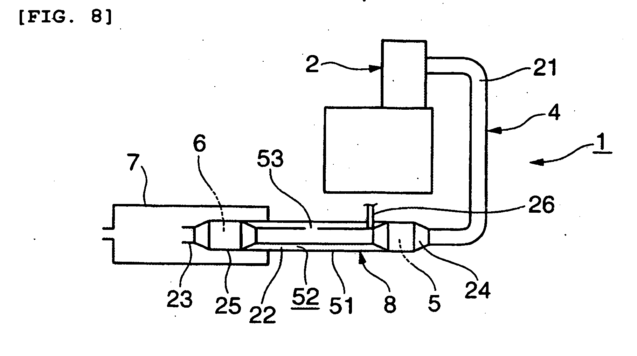

The exhaust system for a four-cycle engine according to the present teaching can be constructed as shown in FIGs. 8 through 11.

FIGs. 8 through 11 show constructions of other embodiments. In these figures, the same reference numerals and symbols will be used for members the same as or equivalent to the members described in the FIGs. 1 through 7, and descriptions will not be made in detail.

In the exhaust pipe 4 shown in FIG. 8, an outer cylinder 51 for covering the second pipe 22 is welded to a part between the upstream catalyst 5 and the downstream catalyst 6, and this part has a double pipe structure. In this embodiment, the resonator 8 is constructed using a space 52 having an annular cross-section, which is formed between the outer cylinder 51 and the second pipe 22. A communicative opening 53 between the resonator 8 and the exhaust passage is positioned downstream of the part of the exhaust pipe 4 to which the secondary air inducting pipe 26 is connected. That is, the exhaust system 1 shown in FIG. 8 practically has the construction same as the exhaust system 1 shown in FIGs. 1 through 7. The effect same as the embodiment shown in FIGs. 1 through 7 can be obtained if the resonator 8 is formed as shown in FIG. 8.

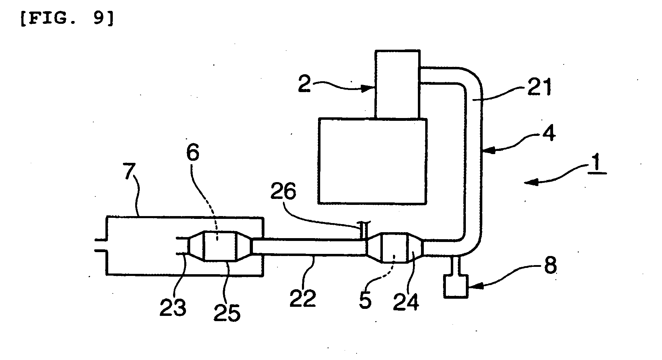

In the exhaust system 1 of the engine 2 shown in FIG. 9, the resonator 8 is connected to a part of the exhaust pipe 4 upstream of the upstream catalyst 5. According to this embodiment, the resonator 8 can reduce a reflected wave due to a reflection of a positive pressure wave having traveled downstream from the exhaust port 3 of the engine 2 on the upstream catalyst 5, and thereby the substantial length of the exhaust pipe 4 can be made longer because of the resonator 8. Therefore, the effect same as the exhaust system 1 shown in FIGs. 1 through 7 can be obtained also with this embodiment.

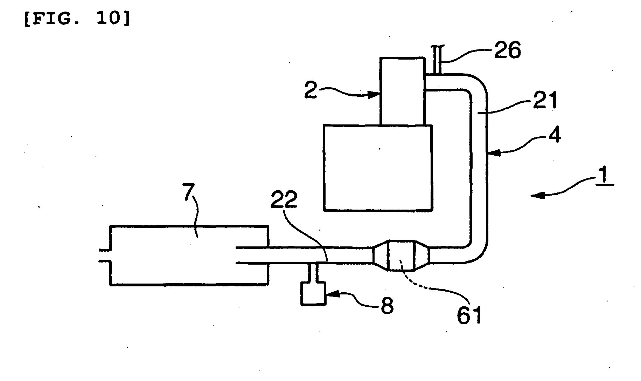

In the exhaust system 1 of the engine 2 shown in FIG. 10, one catalyst 61 is provided at a middle part of the exhaust pipe 4, and the resonator 8 is connected to a part of the exhaust pipe 4 downstream of the catalyst 61. The same kind of catalyst as the upstream catalyst 5 and the downstream catalyst 6 described in the embodiment shown in FIGs. 1 through 7 is used as the catalyst 61. Also, the secondary air inducting pipe 26 is connected to the upstream end of the exhaust pipe 4 or the exhaust port 3 of the engine 2 so that secondary air is drawn into the exhaust passage upstream of the catalyst 61.

The resonator 8 is disposed downstream of the catalyst 61 in this embodiment, and thereby a negative pressure wave returning from the downstream end of the exhaust pipe 4 toward the engine 2 can be reduced by the resonator 8. Thus, the substantial length of the exhaust pipe 4 can be made longer because of the resonator 8. Further, the secondary air inducting pipe 26 is connected to a part that the resonator 8 does not disturb a flow of exhaust gas, and thereby secondary air can be efficiently drawn into the exhaust passage.

Therefore, the effect same as the exhaust system 1 shown in FIGs. 1 through 7 can be obtained also with this embodiment.

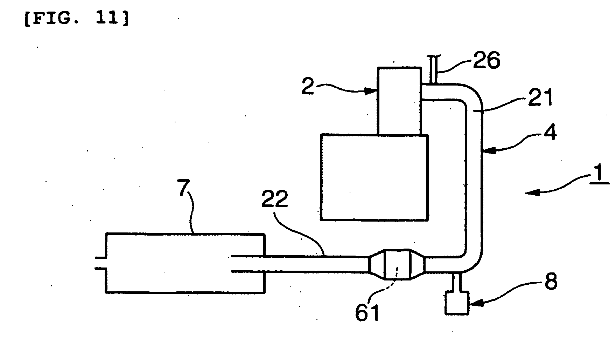

In the exhaust system 1 of the engine 2 shown in FIG. 11, one catalyst 61 is provided at a middle part of the exhaust pipe 4, and the resonator 8 is connected to a part of the exhaust pipe 4 upstream of the catalyst 61. The same kind of catalyst as the upstream catalyst 5 and the downstream catalyst 6 described in the embodiment shown in FIGs. 1 through 7 is used as the catalyst 61. Also, the secondary air inducting pipe 26 is connected to the upstream end of the exhaust pipe 4 or the exhaust port 3 of the engine 2 so that secondary air is drawn into the exhaust passage upstream of the catalyst 61.

The resonator 8 is disposed upstream of the catalyst 61 in this embodiment, and thereby a reflected wave reflected on the catalyst 61 can be reduced by the resonator 8. Thus, the substantial length of the exhaust pipe 4 can be made longer because of the resonator 8. Further, the secondary air inducting pipe 26 is connected to a part that the resonator 8 does not disturb a flow of exhaust gas, and thereby secondary air can be efficiently drawn into the exhaust passage. Therefore, the effect same as the exhaust system 1 shown in FIGs. 1 through 7 can be obtained also with this embodiment.

In the description above, in order to achieve the above object, a first embodiment of an exhaust system for a four-cycle engine is disclosed with a catalyst provided in an exhaust pipe, in which a resonator is provided in the exhaust pipe.

According to a second embodiment, preferably the resonator is disposed downstream of the catalyst.

According to a third embodiment, the resonator is disposed upstream of the catalyst.

According to a fourth embodiment, two catalysts are disposed upstream and downstream along a flow of exhaust gas at a distance from each other.

According to a fifth embodiment, the catalysts are disposed upstream and downstream of the resonator.

According to a sixth embodiment, a secondary air passage for inducting fresh air is connected to the exhaust pipe.

According to a seventh embodiment, the secondary air passage is connected to a part of the exhaust pipe upstream of the resonator.

According to an eighth embodiment, the secondary air passage is connected to a part of the exhaust pipe between the catalyst and the resonator.

According to a ninth embodiment, two catalysts are provided and a secondary air passage for inducting fresh air is connected to the exhaust pipe.

According to a tenth embodiment, the secondary air passage is connected to a part of the exhaust pipe upstream of the resonator.

According to an eleventh embodiment, one of the two catalysts is disposed upstream of the resonator and a part of the exhaust pipe to which the secondary air passage is connected, and the other catalyst is disposed downstream of the resonator and the part of the exhaust pipe to which the secondary air passage is connected.

According to the first embodiment, a reflected wave and a negative pressure wave propagating toward the exhaust port of the engine in the exhaust pipe can be reduced by the resonator in a prescribed revolution range. Therefore, the substantial length of the exhaust pipe, in which the catalyst is provided, can be made longer because of the resonator.

Consequently, the present first embodiment can provide an exhaust system for a four-cycle engine compatibly realizing warmup of the catalyst to an active temperature in a short period after starting the engine, and improvement of an output of the engine in low to medium speed operation.

According to the second embodiment, a negative pressure wave returning from the downstream end of the exhaust pipe toward the engine can be reduced by the resonator.

According to the third embodiment, a reflected wave reflected on the catalyst can be reduced by the resonator.

According to the fourth embodiment, exhaust gas can be sufficiently purified by the two catalysts. Therefore, this invention can provide an exhaust system for an engine that can sufficiently purify exhaust gas immediately after a start of the engine.

According to the fifth embodiment, a reflected wave and a negative pressure wave can be reduced by the resonator between the two catalysts.

According to the sixth embodiment, an oxidizing reaction at the catalyst is promoted by secondary air, thus improving the efficiency of purification of exhaust gas.

Secondary air is drawn into the exhaust pipe more easily when exhaust gas smoothly flows in the exhaust pipe. On the other hand, a flux of exhaust gas may be disturbed by the resonator when exhaust gas passes through the resonator. According to the seventh embodiment, the secondary air passage is connected to a part of the exhaust pipe where the flux of exhaust gas is not disturbed by the resonator, in other words, a part of the exhaust pipe where exhaust gas smoothly flows, and thus secondary air can be efficiently drawn into the exhaust pipe.

According to the eighth embodiment, secondary air drawn into the exhaust pipe can be sent to the catalyst positioned upstream by a negative pressure wave traveling toward the engine in the exhaust pipe. Therefore, according to this embodiment, an oxidizing reaction is promoted at the catalyst positioned upstream of the part to which the secondary air passage is connected.

According to the ninth embodiment, exhaust gas can be sufficiently purified by the two catalysts. Also, an oxidizing reaction at the catalysts is promoted by secondary air, and thereby the efficiency of purification of exhaust gas at each catalyst can be improved.

Therefore, according to this embodiment, exhaust gas can be more efficiently purified.

Secondary air is drawn into the exhaust pipe more easily when exhaust gas smoothly flows in the exhaust pipe. On the other hand, a flux of exhaust gas may be disturbed by the resonator when exhaust gas passes through the resonator. According to the tenth embodiment, the secondary air passage is connected to a part of the exhaust pipe where the flux of exhaust gas is not disturbed by the resonator, in other words, a part of the exhaust pipe where exhaust gas smoothly flows, and thus secondary air can be efficiently drawn into the exhaust pipe. Therefore, according to this embodiment, exhaust gas can be sufficiently purified by the two catalysts, and sufficient secondary air can be supplied. Accordingly, exhaust gas can be more sufficiently and efficiently purified.

According to the eleventh embodiment, unnecessary exhaust pulsation can be cancelled out by the resonator between the two catalysts, and secondary air can be sufficiently supplied to a part between the two catalysts. Therefore, exhaust gas can be more sufficiently and efficiently purified while improving an output of the engine.

Thus, the description above discloses, according to a first embodiment, an exhaust system for a four-cycle engine with a catalyst provided in an exhaust pipe, wherein a resonator is provided in the exhaust pipe.

Further, according to a second embodiment, the resonator is disposed downstream of the catalyst.

Further, according to a third embodiment, the resonator is disposed upstream of the catalyst.

Further, according to a fourth embodiment, two catalysts are disposed upstream and downstream along a flow of exhaust gas at a distance from each other.

Further, according to a fifth embodiment, the catalysts are disposed upstream and downstream of the resonator.

Further, according to a sixth embodiment, a secondary air passage for inducting fresh air is connected to the exhaust pipe.

Further, according to a seventh embodiment, the secondary air passage is connected to a part of the exhaust pipe upstream of the resonator.

Further, according to an eighth embodiment, the secondary air passage is connected to a part of the exhaust pipe between the catalyst and the resonator.

Further, according to a ninth embodiment, two catalysts are provided and a secondary air passage for inducting fresh air is connected to the exhaust pipe.

Further, according to a tenth embodiment, the secondary air passage is connected to a part of the exhaust pipe upstream of the resonator.

Further, according to an eleventh embodiment, one of the two catalysts is disposed upstream of the resonator and a part of the exhaust pipe to which the secondary air passage is connected, and the other catalyst is disposed downstream of the resonator and the part of the exhaust pipe to which the secondary air passage is connected.

Further, the description above discloses in order to improve an output of an engine with a catalyst provided in an exhaust pipe in a manner such that warmup of the catalyst is facilitated, in particular an embodiment in which catalysts 5 and 6 are provided in an exhaust pipe 4 of a four-cycle engine 2, and in which a resonator 8 is provided in the exhaust pipe 4.

## Claims

1. Exhaust system for an engine, in particular for motorcycles, with at least one catalyst (5,6,61) provided in an exhaust pipe (4), and a resonator (8) connected to the exhaust pipe (4), wherein a respective catalyst is disposed upstream and downstream of the resonator.

2. Exhaust system for an engine according to claim 1, wherein the two catalysts (5,6) are disposed along a flow of exhaust gas at a distance from each other.

3. Exhaust system for an engine according to one of the claims 1 to 2, wherein a secondary air passage (26) for inducting fresh air is connected to the exhaust pipe (4).

4. Exhaust system for an engine according to one of the claims 1 to 3, wherein the secondary air passage (26) is connected to a part of the exhaust pipe (4) upstream of the resonator (8).

5. Exhaust system for an engine according to one of the claims 1 to 4, wherein the secondary air passage (26) is connected to a part of the exhaust pipe (4) between the catalyst (5) and the resonator (8).

6. Exhaust system for an engine according to one of the claims 1 to 5, wherein two catalysts (5,6) are provided and a secondary air passage (26) for inducting fresh air is connected to the exhaust pipe (4).

7. Exhaust system for an engine according to one of the claims 1 to 6, wherein the secondary air passage (26) is connected to a part of the exhaust pipe (4) upstream of the resonator (8).

8. Exhaust system for an engine according to one of the claims 1 to 7, wherein one of the two catalysts (5) is disposed upstream of the resonator (8) and a part of the exhaust pipe (4) to which the secondary air passage (26) is connected, and the other catalyst (6) is disposed downstream of the resonator (8) and the part of the exhaust pipe (4) to which the secondary air passage (26) is connected.

## Patentansprüche

1. Abgassystem für eine Brennkraftmaschine, insbesondere für Motorräder, mit zumindest einem Katalysator (5, 6, 61), vorgesehen in einem Abgasrohr (4), und einem Resonator (8), verbunden mit dem Abgasrohr (4), wobei ein jeweiliger Katalysator stromauf und stromab des Resonators angeordnet ist.

2. Abgassystem für eine Brennkraftmaschine nach Anspruch 1, wobei die zwei Katalysatoren (5, 6) entlang einer Abgasströmung mit einem Abstand voneinander angeordnet sind.

3. Abgassystem für eine Brennkraftmaschine nach Anspruch 1 bis 2, wobei ein Sekundärluftkanal (26) zum Einleiten von Frischluft mit dem Abgasrohr (4) verbunden ist.

4. Abgassystem für eine Brennkraftmaschine nach einem der Ansprüche 1 bis 3, wobei der Sekundärluftkanal (26) mit einem Teil des Abgasrohres (4) stromauf des Resonators (8) verbunden ist.

5. Abgassystem für eine Brennkraftmaschine nach einem der Ansprüche 1 bis 4, wobei der Sekundärluftkanal (26) mit einem Teil des Abgasrohres (4) zwischen dem Katalysator (5) und dem Resonator (8) verbunden ist.

6. Abgassystem für eine Brennkraftmaschine nach einem der Ansprüche 1 bis 5, wobei zwei Katalysatoren (5, 6) vorgesehen sind und ein Sekundärluftkanal (26) zum Einleiten von Frischluft mit dem Abgasrohr (4) verbunden ist.

7. Abgassystem für eine Brennkraftmaschine nach einem der Ansprüche 1 bis 6, wobei der Sekundärluftkanal (26) mit einem Teil des Abgasrohres (4) stromauf des Resonators (8) verbunden ist.

8. Abgassystem für eine Brennkraftmaschine nach einem der Ansprüche 1 bis 7, wobei einer der zwei Katalysatoren (5) stromauf des Resonators (8) und einem Teil des Abgasrohres (4), mit dem der Sekundärluftkanal (26) verbunden ist, stromauf des Resonators (8) angeordnet ist und der andere Katalysator (6) stromab des Resonators (8) und dem Teil des Abgasrohres (4), mit dem der Sekundärluftkanal (26) verbunden ist, angeordnet ist.

## Revendications

1. Système d'échappement pour un moteur thermique, en particulier pour des motocycles, avec au moins un catalyseur (5, 6, 61) prévu dans un tuyau d'échappement (4), et un résonateur (8) connecté au tuyau d'échappement (4), dans lequel un catalyseur respectif est disposé en amont et en aval du résonateur.

2. Système d'échappement pour un moteur thermique selon la revendication 1, dans lequel les deux catalyseurs (5, 6) sont disposés le long d'un écoulement de gaz d'échappement, à une certaine distance l'un de l'autre.

3. Système d'échappement pour un moteur thermique selon l'une des revendications 1 à 2, dans lequel un passage d'air secondaire (26), pour induire de l'air frais, est connecté au tuyau d'échappement (4).

4. Système d'échappement pour un moteur thermique selon l'une des revendications 1 à 3, dans lequel le passage d'air secondaire (26) est connecté à une partie du tuyau d'échappement (4) située en amont du résonateur (8).

5. Système d'échappement pour un moteur thermique selon l'une des revendications 1 à 4, dans lequel le passage d'air secondaire (26) est connecté à une partie du tuyau d'échappement (4), située entre le catalyseur (5) et le résonateur (8).

6. Système d'échappement pour un moteur thermique selon l'une des revendications 1 à 5, dans lequel deux catalyseurs (5, 6) sont prévus et un passage d'air secondaire (26), pour introduire de l'air frais, est connecté au tuyau d'échappement (4).

7. Système d'échappement pour un moteur thermique selon l'une des revendications 1 à 6, dans lequel le passage d'air secondaire (26) est connecté à une partie du tuyau d'échappement (4) située en amont du résonateur (8).

8. Système d'échappement pour un moteur thermique selon l'une des revendications 1 à 7, dans lequel l'un (5) des deux catalyseurs est disposé en amont du résonateur (8) et une partie du tuyau d'échappement (4), à laquelle le passage d'air secondaire (26) est connecté, et l'autre catalyseur (6) est disposé en aval du résonateur (8) et la partie du tuyau d'échappement (4), à laquelle le passage d'air secondaire (26) est connecté.
